(19) Europäisches Patentamt
European Patent Office
Office européen des brevets

(11) EP 1 722 562 A1

(12) EUROPEAN PATENT APPLICATION

(43) Date of publication:
15.11.2006 Bulletin 2006/46

(51) Int Cl.:
H04N 5/74 (2006.01)  G03B 21/53 (2006.01)

(21) Application number: 06008383.9

(22) Date of filing: 24.04.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 13.05.2005 JP 2005141634

(71) Applicant: KABUSHIKI KAISHA TOSHIBA
Tokyo 105-8001 (JP)

(72) Inventor: Saito, Kimiaki
c/o Toshiba Corporation
Minato-ku
Tokyo 105-8001 (JP)

(74) Representative: HOFFMANN EITLE
Patent- und Rechtsanwälte
Arabellastrasse 4
81925 München (DE)

(54) Projection apparatus and distance measuring method for projection apparatus

(57) According to one embodiment, a projection apparatus comprises a projection unit (31) to emit projection light on an object in a first direction, a light emitting unit (C) to irradiate the object with a ray in a second direction which is different from the first direction by approximately four (4) degrees to thirty (30) degrees, a light receiving unit (D) to receive reflected light from the object from the ray irradiated by the light emitting unit in a third direction which is different from the first direction by approximately four (4) degrees to thirty (30) degrees, and a control unit (2, 27, 39) to adjust the projection light to be emitted by the projection unit in accordance with the reflected light received by the light receiving unit.

FIG. 1

# Description

One embodiment of the invention relates to a projection apparatus such as a liquid crystal projector, or a DLP™ projector, and a distance measuring method of the projection apparatus which measures a distance between the projection apparatus and a screen on that projection light is emitted.

In recent years, plenty of digital video image devices have been launched in a market, and, for example, there is a projection apparatus employing a light source lamp such as a liquid crystal projector or a DLP™ projector. The projection apparatus such as the liquid crystal projector measures a distance from the projection apparatus to a screen or an object, and performs focus adjustments based on the measured distance. Similarly, for measuring a distance from the projection apparatus to the screen, infrared rays is used in the projection apparatus.

Japanese Patent Application Publication (KOKAI) No. 11-264963 (hereinafter "first reference") discloses a projector having an optical axis adjustment mechanism of a distance measuring mechanism and capable of changing an axial direction of the projection light of infrared rays according to a screen position.

Japanese Patent Application Publication (KOKAI) No. 2003-57743 (hereinafter "second reference") discloses a projector equipped with two phase difference system distance measuring sensors to detect a tilt angle of a screen by constituting these sensors so that straight lines connecting distance measuring points and light receiving elements intersect each other intermediately.

However, in the first reference and the second reference mentioned above, in the case where a screen to be distance-measured or an object which is a substitute of the screen has a high reflectance, reflected light is so strong that an error may occur due to an effect of the reflected light at the time of distant measurement.

It is an object of the present invention to provide a projection apparatus and a method of distance-measuring the projection apparatus capable of measuring a distance from a screen or the like with high precision while avoiding an effect of reflected light from the screen or the like.

One embodiment of the invention is a projection apparatus characterized by comprising: a projection section which emits projection light to be projected on a screen; a light emitting section which irradiates the screen with an infrared ray in a direction which is different from a direction of the projection light by 10 degrees or more; a light receiving section which receives reflected light from the screen of the infrared ray irradiated by the light emitting section via a lens in a direction which is different from the direction of the projection light by 10 degrees or more to output a detection signal according to a light receiving position on a light receiving element of the reflected light of the infrared ray; and a control section which calculates a distance from the lens to the screen according to the detection signal of the light receiving section to control the projection light of the projection section.

In the above mentioned projection apparatus, irradiation is performed while a direction of infrared rays is differentiated by 10 degrees or more around a direction of projection light, for example, thereby making it possible to perform precise distance measurement while avoiding an effect of reflected light.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a partially cutaway view in a perspective showing an exemplary projection apparatus equipped with a distance measuring sensor unit according to an embodiment of the present invention;
FIG. 2 is a diagram showing an exemplary construction of the distance measuring sensor unit according to the embodiment;
FIG. 3 is a perspective view showing an exemplary projection apparatus according to the embodiment;
FIG. 4 is a block diagram showing an exemplary construction of the distance measuring sensor unit and peripherals in the projection apparatus according to the embodiment;
FIG. 5 is a block diagram showing an exemplary electrical construction of the projection apparatus according to the embodiment;
FIG. 6 is a diagram illustrating an exemplary relationship between the distance measuring sensor unit and a screen according to the embodiment;
FIG. 7 is a diagram illustrating principles of triangular distance measurement employed by the exemplary distance measuring sensor unit according to the embodiment;
FIG. 8 is a diagram illustrating an exemplary distance measuring operation of the distance measuring sensor unit according to the embodiment;
FIG. 9 is a flowchart showing an exemplary distance measuring process of the distance measuring sensor unit according to the embodiment;
FIG. 10 is a graph showing an exemplary relationship between a horizontal angle and a distance measuring error of infrared rays of the distance measuring sensor unit according to the embodiment;
FIG. 11 is a diagram illustrating principles of measuring keystone by the distance measuring sensor unit according to the embodiment;
FIG. 12 is a schematic view showing an exemplary construction of the projection apparatus equipped with a plurality of distance measuring sensor units according to the embodiment; and

FIG. 13 is a flowchart showing an exemplary keystone processing operation of the projection apparatus according to the embodiment.

Various embodiments according to the invention will be described hereinafter with reference to the accompanying drawings. In general, according to one embodiment of the invention, a projection apparatus comprises a projection unit to emit projection light on an object in a first direction, a light emitting unit to irradiate the object with a ray in a second direction which is different from the first direction by approximately four (4) degrees to thirty (30) degrees, a light receiving unit to receive reflected light from the irradiated object in a third direction which is different from the first direction by approximately four (4) degrees to thirty (30) degrees, and a control unit to adjust the projection light to be emitted by the projection unit in accordance with the reflected light received by the light receiving unit.

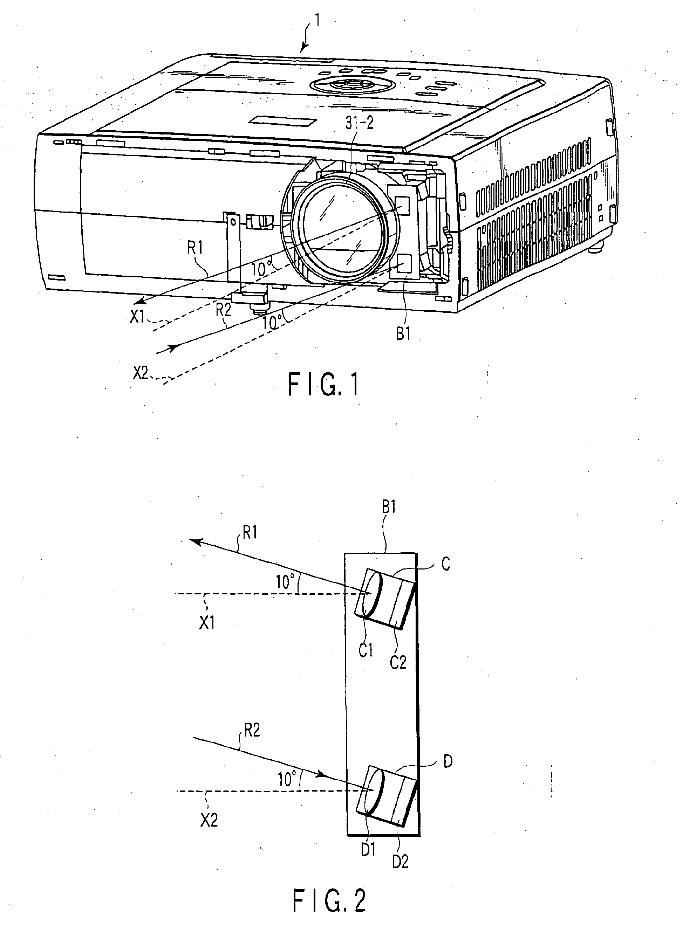

FIG. 1 shows an exemplary projection apparatus 1 equipped with a distance measuring sensor unit according to one embodiment. The projection apparatus 1 is a liquid crystal projector in this embodiment, and includes a distance measuring sensor unit B1.

The distance measuring sensor unit B1 measures a distance to a screen or an object (also collectively referred as "screen") by receiving reflected light from the screen. The projection apparatus 1, in response to the distance measurement, performs focus control or keystone processing. The distance measuring sensor unit B1, as shown in FIG. 2, has an infrared ray emitting unit C and an infrared ray receiving unit D. As shown in FIGS. 1-3, these units are formed in a state in which, for example, an angle of 10 degrees is tilted with respect to reference axes X1 and X2 parallel to a projection direction R0 of projection light projected from a lens unit 31-2.

The infrared ray emitting unit C has an objective lens C1 and an infrared ray emitting element C2, and the infrared ray receiving unit D has an objective lens D1 and an infrared ray receiving element D2, respectively.

In addition, the infrared ray emitting unit C is formed so that an axis connecting the infrared ray emitting element C2 and a center of the lens C1 passing through the infrared rays is in a direction which is different from a direction X1 of the projection light R0 by 10 degrees or more. Similarly, the infrared ray receiving unit D is formed so that an axis connecting a center of the lens D1 passing through reflected light of infrared rays and a center position of a light receiving element D2 of the reflected light is in a direction which is different from a direction X2 of the reflected light R0 by 10 degrees or more.

An angle in this embodiment, as described later, may choose a value between approximately four (4) degrees and thirty (30) degrees, more preferably between approximately ten (10) degrees and twenty-five (25) degrees. By setting the angle, it becomes possible to avoid receiving reflected light from a screen of projection light, and further, to reliably receive the reflected light from a screen of infrared rays emitted by the infrared ray emitting unit C. The value of the angle, however, is provided as one example, and an effective angle range may be different depending on a structure and/or a state of the projection apparatus 1. The distance measuring sensor unit B1 is covered by a front shield plate 6 made of acrylic resin. The front shield plate 6 blocks light which is shorter wavelength than infrared light.

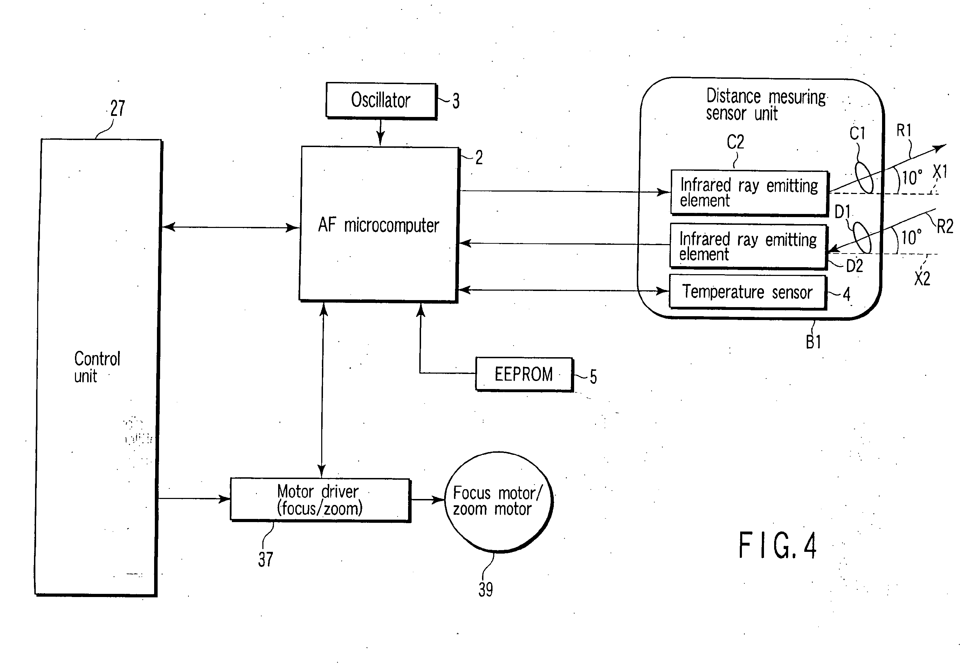

FIG. 4 shows an exemplary construction of the distance measuring sensor unit B1 and peripherals in the projection apparatus 1. The distance measuring sensor unit B1 couples to an auto focusing microcomputer (also referred as "AF microcomputer") 2 which is coupled to an oscillator 3. The distance measuring sensor unit B1 includes the infrared ray emitting unit C, the infrared ray emitting unit D, and a temperature sensor 4. The AF microcomputer 2 is coupled to an EEPROM 5 to store position calibration data of the distance measuring sensor unit B1. The position calibration data is used for adjusts dispersion of the position of the distance measuring sensor unit B1, and is data measured when the projection apparatus 1 is assembled. The AF microcomputer 2 also couples to a control unit 27 and a motor driver 37 which drives a focus motor/zoom motor 39.

The AF microcomputer 2 controls the infrared ray emitting unit C and the infrared ray emitting unit D in accordance with commands from the control unit 27, and calculates a distance to a screen and/or a tilt, on the basis of a signal output from the infrared ray emitting element D2. Further, the AF microcomputer 2 controls the motor driver 37 to adjust projected light to be in focus.

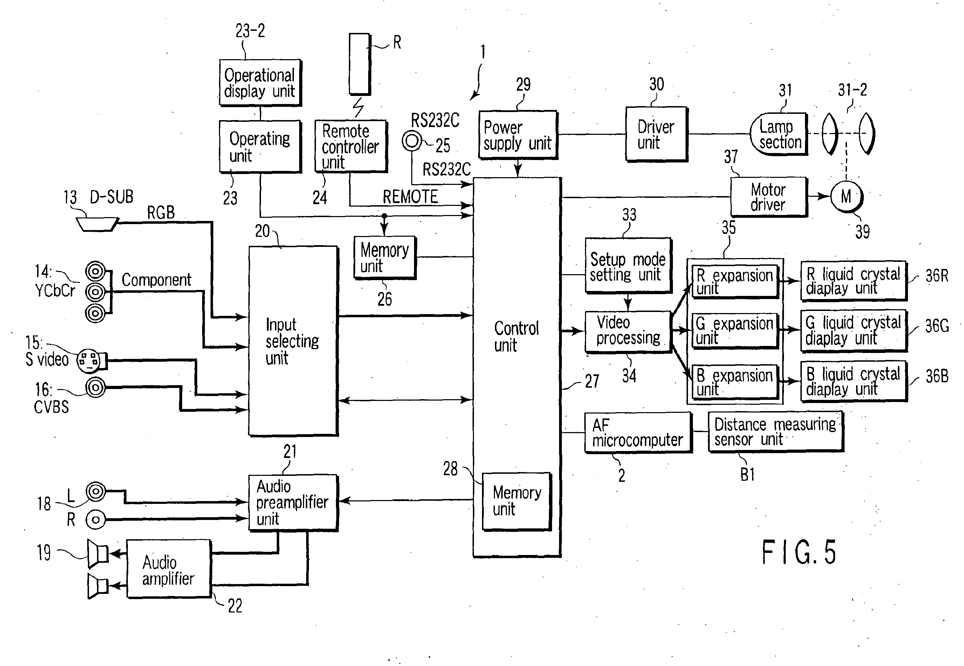

FIG. 5 shows an exemplary electrical construction of the projection apparatus 1.

The projection apparatus 1 includes a D-SUB terminal 13, a component video terminal (also referred as "YCbCr terminal") 14, an S-video terminal 15, and a composite video terminal (also referred as "CVBS terminal") 16.

The D-SUB terminal 13 is the terminal to which a computer or the like is connected. The YCbCr terminal 14 is the terminal to which a Video Tape Recorder (also referred as "VTR") for a business use, a broadcasting satellite digital tuner (also referred as "BS digital tuner"), a digital versatile disk player (also referred as "DVD player") or the like are often connected. The YCbCr terminal 14 receives component video signals in which brightness signals are separated from color-difference signals. The S-video terminal 15 is used in connecting to VTR or television and the like. The CVBS terminal 16 is used for a composite signal. The CVBS terminal 16 receives composite video signals in which brightness signals and color-difference signals are mixed. All of the D-SUB terminal 13, the YCbCr terminal 14, the S-video terminal 15, and the CVBS terminal 16 are connected to an input selecting unit 20.

The input selecting unit 20 selects an RGB input signal, converts it into a video image, and supplies the video image to the control unit 27. The input selecting unit 20 and an audio preamplifier unit 21 perform the operational process in response to a control command or a control signal from the control unit 27.

Furthermore, the projection apparatus 1 includes voice terminals 18 and speakers 19. The audio terminals 18 are coupled to an audio preamplifier unit 21. The audio preamplifier unit 21 also couples to the speakers 19 via an audio amplifier unit 22. The audio preamplifier unit 21 supplies an input signal to an audio amplifier unit 22 after processing on volume control, sound quality, and acoustic effect and the like have been mainly performed.

In addition, the projection apparatus 1 includes an operating unit 23 coupled to an operational display unit 23-2, a remote controller unit 24, an RS232C terminal 25, and a memory unit 26. The operating unit 23 is provided as a power supply switch and an operating switch at a main body. The operational display unit 23-2 displays operational information. The remote controller unit 24 performs communication processing with a remote controller R. The RS232C terminal 25 and a memory unit 26 acquire a control signal. The operating unit 23, the remote controller unit 24, the RS232C terminal 25, and the memory unit 26 are coupled to the control unit 27.

The control unit 27 has a memory unit 28, and further, as described, the focus motor/zoom motor 39 incorporated in the lens unit 31-2 is coupled via the motor driver 37.

The projection apparatus 1 also has a power supply unit 29 for supplying electric power. In particular, the power supply unit 29 supplies a driving current which has a desired output rate, to a driver unit 30 and a lamp unit 31.

Further, the projection apparatus 1 includes a setup mode setting unit 33, a video processing unit 34, an expansion unit 35, an R-liquid crystal display unit 36R, a G-liquid crystal display unit 36G, and a B-liquid crystal display unit 36B. The setup mode setting unit 33 is used for setting plurality of modes. The video processing unit 34 performs video image processing upon the receipt of an output from the control unit 27. The expansion unit 35 expands a video image signal processed to be a video image by the video processing unit 34 by an R-signal, a G-signal, and a B-signal. The R-liquid crystal display unit 36R, the G-liquid crystal display unit 36G, and the B-liquid crystal display unit 36B display an image on a liquid crystal screen or the like (not shown) upon the receipt of a liquid crystal display driving current therefrom.

In the lamp unit 31, the projected light beams each reach and transmit the R-liquid crystal display unit 36R, G-liquid crystal display unit 36G, and B-liquid crystal display unit 36B, and the projection light beams including a video image are emitted and projected on a screen.

In an optical construction of the projection apparatus 1, the irradiation light from the lamp unit 31 passes through a multi-lens (not shown), and a convex lens (not shown) provided adjacent to the multi-lens, passes though a transmission mirror or reflects the mirror (not shown), and transmits each of the liquid crystal panels 36R, 36G, an 36B. In this manner, the irradiation light irradiated from the projection lamp 31 is emitted from the lens unit 31-2 while the light includes a video image. The video image is focused on the screen on which the projection light is to be projected.

The lens unit 31-2, as described, incorporates the motor driver 37 and the focus motor/zoom motor 39. The control unit 27 supplies control signals to perform proper focus control and zooming control.

The remote controller R for use in the projection apparatus 1 has an input change button which changes an input signal, a selection and OK button which performs selection or determination by menu selection and adjustment, cursor keys, and menu buttons for making menu display or the like, respectively.

When the projection apparatus 1 is connected to an external device, for example, a video deck which is an external input device is connected by employing the composite terminal 16, the audio terminals 18, and the S-video terminal 15. The projection apparatus 1 and a DVD player which is an external input device are connected to each other by employing the YCbCr terminal 14. The projection apparatus 1 and a personal computer which is an external input device are generally connected to each other by employing the D-SUB terminal 13.

Now, a basic operation of the above mentioned projection apparatus 1 will be described below in detail with referring to the accompanying drawings.

First, upon the receipt of a power supply operation of the operating unit 23 or a remote controller R, the projection apparatus 1 starts up, and a video image signal specified by an input change button (not shown) or the like is selected by means of the input selecting unit 20. That is, by an operation of the input change button on the remote controller R, for example, when "YPbPr" is selected, the input selection unit 20 selects a component video image signal sent from an external DVD player via the YPbPr terminal 14. Then, with respect to the component video image signal, the input selecting unit 20 determines signal type, performs image conversion processing according to the signal type, and outputs an RGB signal.

The RGB signal output from the input selecting unit 20 is supplied to the control unit 27.

In the meantime, the setup mode setting unit 33 supplies a control signal to a video processing unit 34 according to a video image mode or a video image size specified by a size button (not shown) on the operating unit 23 or the remote controller unit 24. The video processing unit 34 performs image conversion processing to the RGB signal supplied from the control unit 27 in response to a given control signal. As a result, the RGB signal is converted to the required video image format or video image size as a converted image signal.

If an operation for selecting a video image mode is "CINEMA", the video processing unit 34 performs image processing to the RGB signal so as to enter a video image mode in response to this operation, and the RGB signal is converted to a cinema video image signal.

The video processing unit 34 supplies the converted video image signal to the expansion unit 35, and the expansion unit 35 expands the supplied signal into an R-signal, a G-signal, and a B-signal. Then, the expanded signals are displayed as video images, respectively, on liquid crystal screens of the R-liquid crystal display unit 36R, the G-liquid crystal display unit 36G, and the B-liquid crystal display unit 36B, respectively.

On the other hand, the power supply unit 29 supplies electric power to the driver unit 30. The driver unit 30 supplies driving current to the lamp unit 31 upon the receipt of control such as a 100% output or a 50% output. The lamp unit 31 emits projection light in response to the driving current. Then, the projection light passes through the multi-lens and the convex lens provided adjacent to the multi-lens, passes through the transmission mirror or reflects the mirror, and transmits each of the liquid crystal panels 36R, 36G, and 36B. In this manner, the projection light from the lamp unit 31 is irradiated via the lens unit 31-2 in a state in which the light includes a video image, and a video image is focused on a screen on which, the projection light is to be projected, although not shown.

Furthermore, the control unit 27 supplies a control signal which is generated in accordance with an operation a zooming button in the operating unit 23 and/or the remote controller unit 24, to the motor driver 37 in the lens unit 31-2 so as to control the focus motor/zoom motor 39. Thereby, proper focus control or zoom control is imparted to the projection light.

As described above, the projection apparatus 1 has the basic functions. Next, distance measuring processing or keystone processing that the projection apparatus 1 performs will be described below.

When a user uses the projection apparatus 1, there may be a situation that there is not a dedicated screen but a flat object such as a whiteboard. Reflectance of the surface of the whiteboard is usually higher than the surface of the dedicated screen. Assuming such the situation, it is contemplated that the projection apparatus 1 projects a video image not only onto a commercially available dedicated screen but also onto a lustrous object such as the whiteboard.

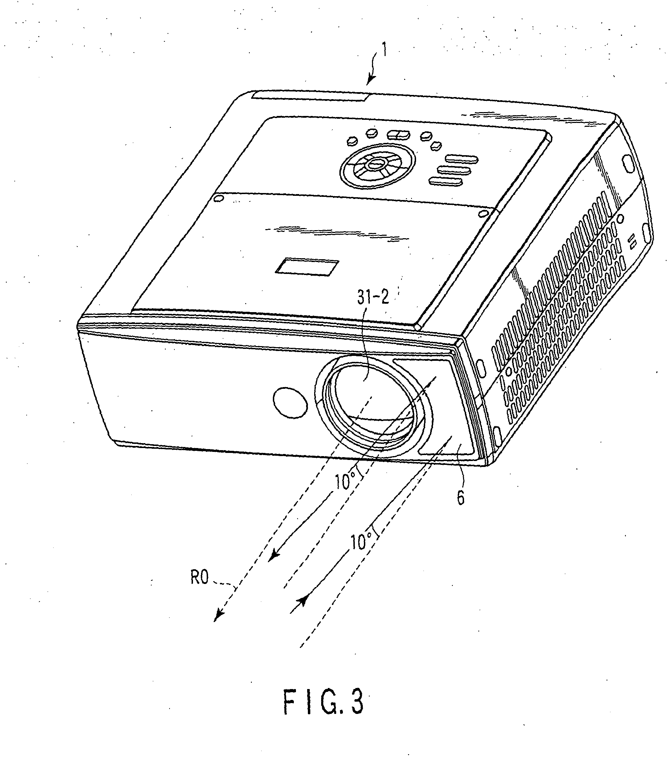

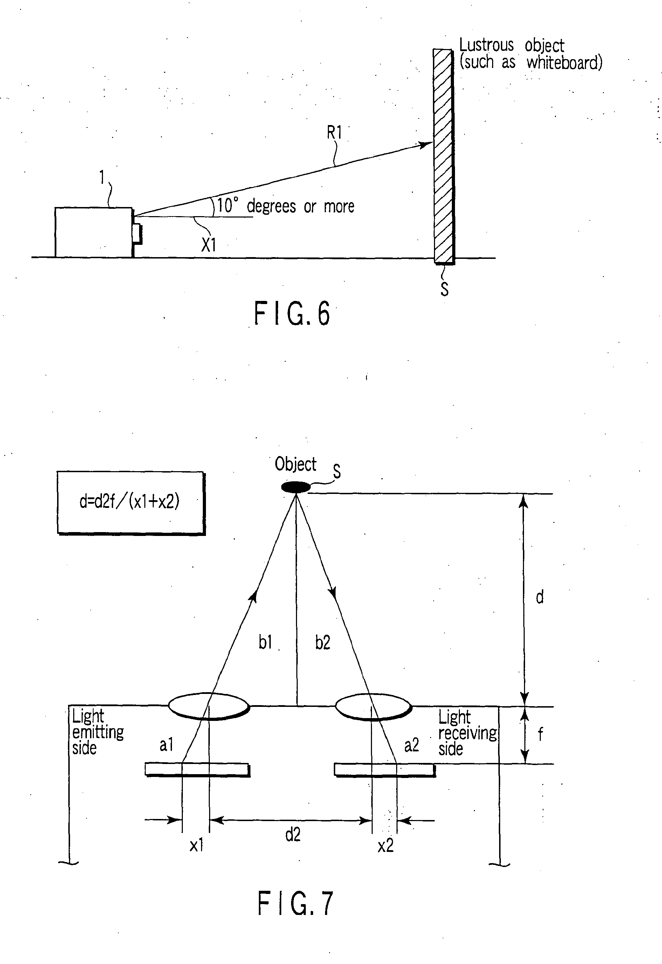

For example, as shown in FIG. 6, in the case that a lustrous object S like the whiteboard is used as a screen, if a infrared ray R1 generated from the infrared ray emitting element C2 is irradiated from the infrared ray emitting element C2 in a direction parallel to projection light R0 (refer to FIG. 3) of the lens unit 31-2, a very large amount of reflected light R2 may return to the infrared ray receiving element D2 depending on a reflectance of the lustrous object S. By the presence of this excessive reflected light R2, a measured value of a distance between the projection apparatus 1 and the lustrous object S may be inaccurate.

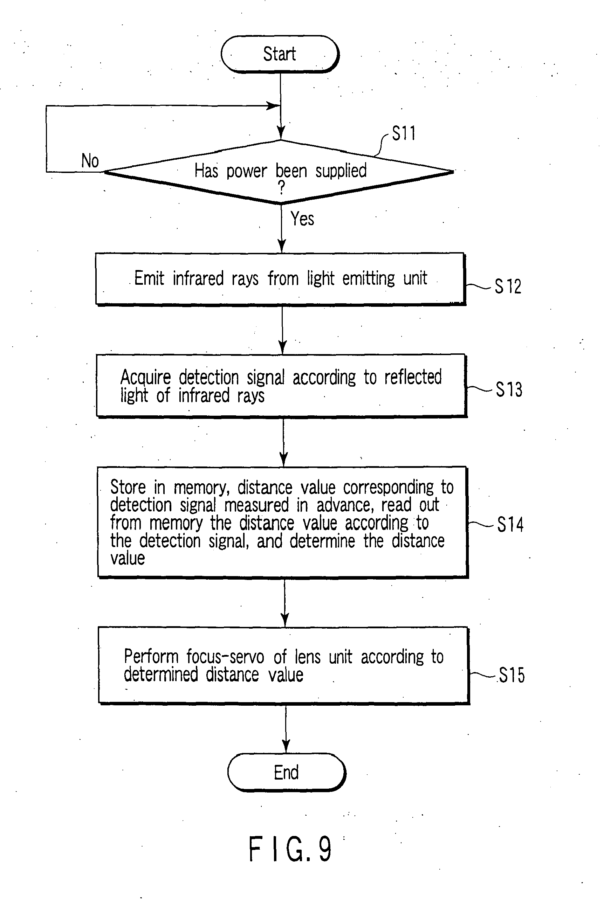

In contrast, according to the distance measuring processing of the projection apparatus 1 in this embodiment, a distance between the projection apparatus 1 and the lustrous object S is measured more accurately. The distance measuring process will be described below in detail with referring to the flowchart of FIG. 9..

First, when the projection apparatus 1 is powered ON (block S11), the infrared ray R1 is emitted from the light emitting element C2 of the light emitting unit C, and the object S is irradiated via the lens C1 (block S12). In this embodiment, the infrared ray is irradiated to be upwardly shifted by about 10 degrees instead of being irradiated in a direction, coordinate axis X1, parallel to the projection light R0 of the lens unit 31-2. In order to achieve this angle, as shown in FIG. 2, in the distance measuring sensor unit B1, the infrared ray emitting unit C and the infrared ray receiving unit D are formed to be shifted by 10 degrees with respect to the direction of the projection light R0.

Here, basic principles of distance measuring processing of the distance measuring sensor unit B1 will be described with referring to FIG. 7. The distance measuring principles utilize the fact that an object S, a light emitting element a1, and a light receiving element a2 make a triangle. That is, utilizing a gap d2 between the light emitting element a1 and the light receiving element a2; a distance x1 between a center position and a light emitting position of the light emitting element a1; a distance x2 between a center position and light receiving position of the light receiving element a2; and a distance f between a lens and the light emitting element a1 or the light receiving element a2, a distance d from the object S to the lens is calculated by:

$$d = d2 \cdot f / (x1 + x2)$$

It is preferable that the previously mentioned angle meets the following two conditions: (1) the reflected light from the object S is not too large in quantity; and (2) the reflected light from the object S is not too small in quantity. That is, in the light receiving unit D2, when the angle is approximately zero, i.e., when a member has a high reflectance of the object, the reflected light is too large in quantity, thus degrading the precision of the distance measuring processing.

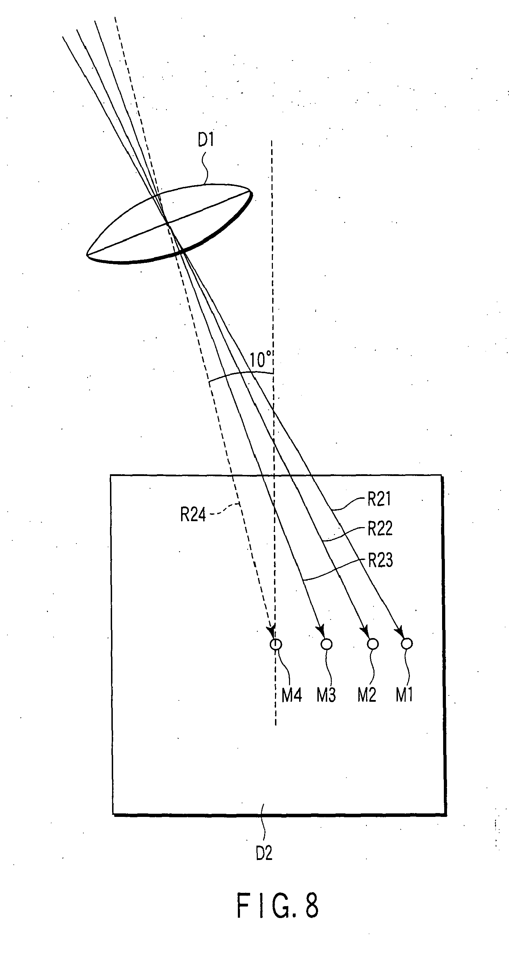

Namely, as shown in FIG. 8, in the light receiving element D2 of the infrared ray light receiving unit D, arrival points M1 to M4 corresponding to reflected light beams R21 to R24 are different from each other according to a distance from the object S to the lens D1. That is, in the case of the object S which is set at a comparatively proximal position, it means that the arrival point M1 is marked. In the case of the object S, which is set at a more distant position, it means that the arrival points M2 and M3 are determined. In the case of the center of the light receiving element D2, it means that the object S exists infinitely. The light receiving element D2 supplies a position signal according to the arrival position to the AF microcomputer 2 at a rear stage, and the AF microcomputer 2 calculates a distance from the lens D1 to the object S, as described later.

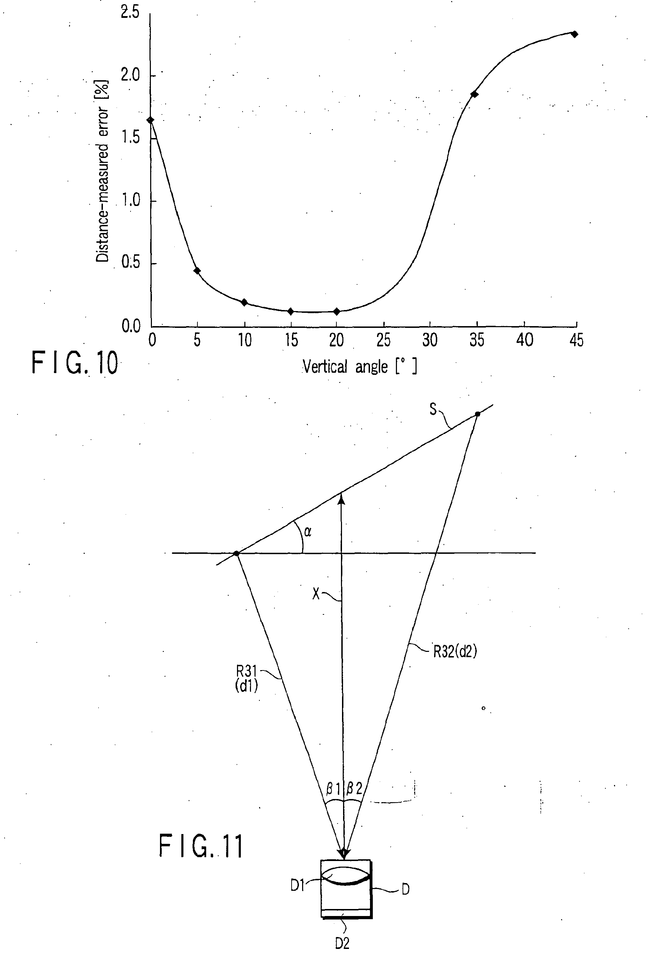

Here, as shown in the graph of FIG. 10, a distance measuring error [%] varies according to a vertical angle of infrared rays. In the graph, an error is the smallest in the range of an angle of approximately ten (10) degrees to approximately twenty-five (25) degrees, and it is found appropriate to select the range of the angle. However, assuming that the distance measuring error should be within 0.75%, it is permissible that the angle may be chosen from approximately four (4) degrees to thirty (30) degrees.

A value indicated in the graph is provided as an example, and a value may slightly vary according to a plenty of elements during measurement, for example, physical characteristics of the measured luminescence of a room or an infrared ray emitting element, and an infrared ray light receiving element. But even if the variation exists, there would not be considerable difference in such a preferred range of an angle.

That is, in the case where a luminous quantity of the reflected light R near a vertical angle near zero (0) degree to four (4) degrees is so large, it is very difficult to sharply detect an arrival point. It means that it' may become inaccurate to measure a distance between the projection apparatus 1 and the object S. Similarly, in the case where the angle near about 30 degrees to 45 degrees is so large, the returning reflected light is small in quantity, and thus, the arrival point is unclear. Therefore, it is also difficult to measure a distance between the projection apparatus 1 and the object S with high precision.

In this way, a detection signal according to the reflected light of the infrared rays detected by the distance measuring sensor unit B1 according to an angle of ten (10) degrees is acquired by means of the AF microcomputer 2 (block S13).

The memory unit 28 of the control unit 27 and the EEPROM 5 stores measurement data in advance. In response to the detection signal, the AF microcomputer 2 reads out the measurement data stored in the memory unit 28 and the position calibration data stored in the EEPROM 5, and specifies the most likely distance value.

It is contemplated that the measurement data be data acquired by actually measuring what detection value is taken in the case where the object is measured in a variety of distances in a factory or the like prior to shipment of the projection apparatus 1.

In this way, the AF microcomputer 2 determines a distance value from the object S to the lens D1, which corresponds to the detection signal (block S14). Then, according to the determined distance value, the AF microcomputer 2 controls the motor driver 37 and the focus motor 39, and performs focus control in order to carry out focus-servo of the lens unit 31-2 (block S15). In other words, the AF microcomputer 2 adjusts the projection light to be emitted to the object.

In this manner, according to the embodiment, even in the case where the object or the screen has high reflectance, distance measuring processing with high precision is made possible, because the infrared ray reflected light is not too strong.

Now, referring to the accompanying drawings, a description will be given with respect to keystone processing for measuring a keystone which is a surface angle of a screen or a tilt by employing the above mentioned distance measuring sensor unit B1.

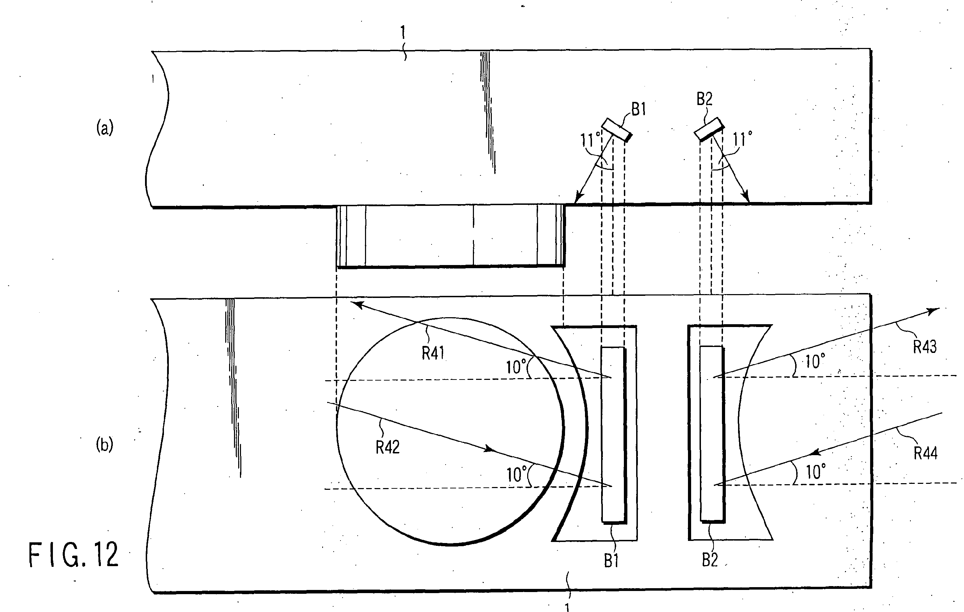

FIG. 11 illustrates principles of measuring a keystone employing the distance measuring sensor unit B1. That is, a plurality of infrared ray reflected light beams R31 an R32 are acquired, the light beams being distance-measured at different angles with respect to a reference axis X. Then, a keystone $\alpha$ which is a surface angle of the screen or a tilt may be obtained by distance values d1 and d2 and angles $\beta1$ and $\beta2$ obtained from these reflected light beams R31 and R32.

In addition, a keystone may also be measured by differentiating irradiation positions of infrared rays as well as differentiating angles of infrared rays. As shown in FIG. 12, a plurality of distance measuring sensor units B1 and B2 are provided, the irradiation positions of infrared rays are differentiated from each other to perform distance measurement a plurality of times, thereby obtaining a screen keystone. That is, in FIG. 12, the two distance measuring sensor units B1 and B2 are provided in the vicinity of a projection lens with a distance. In these distance measuring sensor units B1 and B2 as well, a distance from the lens D1 to the object (screen) S may be measured with high precision while avoiding the above mentioned strong reflected light.

Here, the two distance measuring sensor units B1 and B2 each are provided by further setting an angle of about 11 degrees transversely apart from an angle of 10 degrees between the above mentioned infrared rays R41, R42 and R43, R44 and the reference axis. A distance in measuring position may be gained as compared with a case of obtaining a keystone with only a gap between the two distance measuring sensor units B1 and B2 by this transverse angle of about 11 degrees, thereby it becomes likely to obtain a keystone with higher precision.

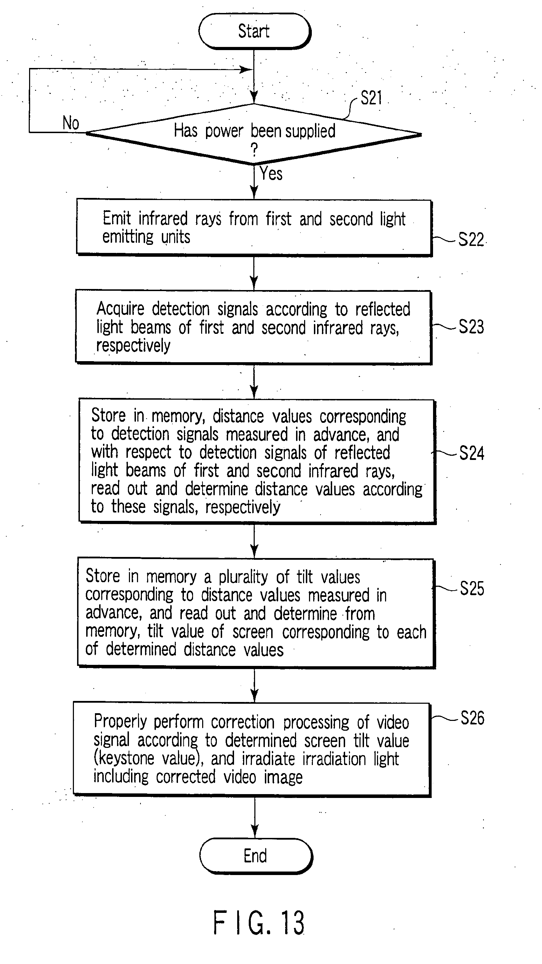

Now, procedures for obtaining a keystone will be described with referring to the flowchart of FIG. 13. That is, when the power supply unit 29 supplies electronic power (block S21), the two distance measuring sensor unit B1 and B2 emit infrared rays, respectively. This timing may be determined in accordance with any sequence, and time intervals are freely determined.

Next, the AF microcomputer 2 acquires a detection signal according to the reflected light of the respective infrared rays (block S23). Then, in accordance with operational procedures similar to the above mentioned distance measuring procedures, the corresponding distance value is acquired from the memory unit 28 and/or the EEPROM 5. Namely, the distance value corresponding to the detection signal measured at the time of factory shipment is stored in advance in the memory unit 28, and, with respect to the detection signals of the two infrared rays reflected light beams, the AF microcomputer 2 reads out the distance values corresponding to the detection signals, respectively, from the memory unit 28 (block S24).

Then, the AF microcomputer 2 reads out a tilt value which is keystone value, corresponding to, these determined two distance values from the memory unit 28 and specify the tilt value, using the position calibration data stored in the EEPROM 5 (block S24). That is, at the time of factory.shipment or the like, actual measurement is performed for a plurality of keystones relating to a plurality of screens, and the data based on this actually measured data is stored in the memory unit 28. In this manner, the tilt value, keystone value, of the object corresponding to each of the determined distance values may be read out and determined from the memory 28.

Lastly, the control unit 27 properly processes a video image signal to correct, and the lump unit 31-2 and the R-, G-, and B-liquid crystal display unit 36R, 36G, and 36B emits projection light including the corrected video image according to the determined tilt value (keystone value) of the object S (block S25). That is, for each of the video image signals that the input selecting unit 20 acquired, the control unit 27 processes to deform according to the keystone value. Namely, in the case where a keystone of ten (10) degrees is present on the object S, the control unit 27 also processes a video image signal to deform by ten (10) degrees, and the R-liquid crystal display unit 36R, G-liquid crystal display unit 36G, and B-liquid crystal display unit 36B display the video image signal thereon. Then, the irradiation light irradiated from the lamp unit 31 is transmitted, thereby displaying a proper video image according to the keystone on the object S. In this manner, even if a positional relationship between the projection apparatus 1 and the object S is not vertical, the projection apparatus 1 is able to properly display the video image on the object S.

In this way, in keystone processing as well, distance measuring processing for avoiding an effect of the above mentioned reflected light is applied, thereby making it possible to perform processing with high precision with respect to an object or a screen such as a whiteboard with a high reflectance as well.

In the above mentioned keystone processing, a plurality of detection units are provided with a distance and keystone processing is performed based on the respective measured values. However, similar processing is made possible by a method of obtaining a plurality of measured values by providing one detection unit and varying an irradiation angle of infrared rays, and, based on the measured value, obtaining a screen keystone.

Although one skilled in the art can achieve the present invention according to a variety of embodiments described above, a variety of modifications of these embodiments can further be easily conceived by one skilled in the art, and it is possible to apply to a variety of embodiments even if one does not have an inventive ability. Therefore, the present invention encompasses a broad range without departing from the disclosed principles and novel features, and is not limited to the above described embodiments.

**Claims**

1. A projection apparatus, **characterized by** comprising:

   a projection unit (31) to emit projection light on an object in a first direction;
   a light emitting unit (C) to irradiate the object with a ray in a second direction, the second direction differing from the first direction by a first angle ranging between four (4) degrees and thirty (30) degrees;
   a light receiving unit (D) to receive reflected light from the object from the ray irradiated by the light emitting unit in a third direction, the third direction differing from the first direction by a second angle ranging between four (4) degrees and thirty (30) degrees; and
   a control unit (2, 27, 39) to adjust the projection light to be emitted by the projection unit in accordance with the reflected light received by the light receiving unit.

2. A projection apparatus according to claim 1, **characterized in that** the light emitting unit includes a light emitting element and a first lens, and an axis passing through the light emitting element and the center of the first lens is along the second direction.

3. A projection apparatus according to claim 1, **characterized in that** the light receiving unit includes a light receiving element and a second lens, and an axis passing through the center of the second lens and the center of the light receiving element is along the third direction.

4. A projection apparatus according to claim 1, **characterized in that** the control unit determines that a distance from the object is proximal when the reflected light of the ray is distant from the center on the surface of the light receiving unit.

5. A projection apparatus according to claim 1, **characterized in that** the projection unit includes a focus motor to change a focus point of the projection light, and the control unit controls the focus motor.

6. A projection apparatus according to claim 1, **characterized in that** the control unit measures a distance between the projection unit and the object on the basis of the reflected light.

7.  A projection apparatus according to claim 6, **characterized in that** the control unit measures a tilt of the surface of the object.

8.  A projection apparatus according to claim 7, **characterized in that** the light receiving unit receives the reflected light a plurality of times, and the control unit measures the tilt in accordance with the plurality of reflected light received by the light receiving unit.

9.  A projection apparatus according to claim 8, **characterized in that** the light emitting unit emits the ray a plurality of times at a different position.

10. A projection apparatus according to claim 8, **characterized in that** the light emitting unit emits the ray a plurality of times in a different direction.

11. A projection apparatus according to claim 7, **characterized by** further comprising a processing unit to correct for a given image to be emitted by the projection unit according to the tilt of the surface of the object.

12. A projection apparatus according to claim 1, **characterized in that** the second direction is different from the first direction by 10 to 25 degrees, and the third direction is also different from the first direction by 10 to 25 degrees.

13. A method used in a projection apparatus to emit projection light on an object in a first direction, **characterized by** comprising:

    irradiating an object with a ray in a second direction, the second direction being different from the first direction by at least four (4) degrees and up to thirty (30) degrees;
    receiving reflected light from the object from the ray irradiated in a third direction, the third direction being different from the first direction by at least four (4) degrees and up to thirty (30) degrees; and
    measuring a distance to the object in accordance with the reflected light received by the light receiving unit.

14. A method according to claim 13, **characterized by** further comprising performing the irradiating and the receiving a plurality of times, and measuring a tilt of the object in accordance with the plurality of the reflected lights received.

15. A method according to claim 14, **characterized in**

that the ray is irradiated a plurality of times at a different position on a surface of the object.

16. A method according to claim 14, **characterized in that** the ray is irradiated a plurality times in a different direction.

17. A method according to claim 13, **characterized in that** the second direction is different from the first direction by at least ten (10) degrees and up to at least twenty-five (25) degrees, and the third direction is different from the first direction by at least ten (10) degrees up to at least twenty-five (25) degrees.

18. A method **characterized by** comprising:

    emitting projection light on an object in a first direction;
    irradiating the object with a ray in a second direction differing from the first direction by at least ten degrees;
    receiving reflected light from the object from the ray irradiated by the light emitting unit in a third direction, the third direction being different from the first direction by an angular variation ranging between four (4) degrees and thirty (30) degrees; and
    adjusting the projection light to be emitted in accordance with the reflected light received.

19. A method according to claim 18, **characterized in that** the adjusting includes focusing the projection light.

20. A method according to claim 18, **characterized by** further comprising measuring a tilt of the object in accordance with the reflected light, and correcting an image to be projected on the basis of the tilt.

FIG. 1

FIG. 2

F I G. 3

FIG.4

F I G. 5

EP 1 722 562 A1

Lustrous object
(such as whiteboard)

R1

1

10° degrees or more

X1

S

# FIG.6

Object S

$$d = d2f/(x1+x2)$$

b1    b2

d

Light
emitting
side

a1

Light
receiving
side

f

a2

x1

d2

x2

# FIG.7

F I G. 8

```
                          ┌─────────────┐
                          │    Start    │
                          └──────┬──────┘
                                 │
        ┌────────────────────────▼────────────────────────┐  S11
   No   ◄           Has power been supplied                ►
        └──────────────────────?─┬───────────────────────┘
                                 │ Yes
          ┌──────────────────────▼──────────────────────┐
          │  Emit infrared rays from light emitting unit │──── S12
          └──────────────────────┬──────────────────────┘
                                 │
          ┌──────────────────────▼──────────────────────┐
          │  Acquire detection signal according to       │
          │  reflected light of infrared rays            │──── S13
          └──────────────────────┬──────────────────────┘
                                 │
          ┌──────────────────────▼──────────────────────┐
          │  Store in memory, distance value corresponding to │
          │  detection signal measured in advance, read out   │
          │  from memory the distance value according to      │──── S14
          │  the detection signal, and determine the distance │
          │  value                                            │
          └──────────────────────┬──────────────────────┘
                                 │
          ┌──────────────────────▼──────────────────────┐
          │  Perform focus-servo of lens unit according to │
          │  determined distance value                     │──── S15
          └──────────────────────┬──────────────────────┘
                                 │
                          ┌──────▼──────┐
                          │     End     │
                          └─────────────┘
```

FIG. 9

FIG.10

FIG.11

(a)

(b)

B1
B2
R41
R42
R43
R44
10°
11°
1

FIG.12

```
                    ┌──────────────┐
                    │    Start     │
                    └──────┬───────┘
                           │
         ┌─────────────────▼─────────────────┐
    No   ◇        Has power been supplied     ◇  ─── S21
  ┌──────◇                  ?                  ◇
  │      └─────────────────┬─────────────────┘
  │                        │ Yes
  │      ┌─────────────────▼─────────────────┐
  │      │ Emit infrared rays from first and  │ ─── S22
  │      │ second light emitting units        │
  │      └─────────────────┬─────────────────┘
  │                        │
  │      ┌─────────────────▼─────────────────┐
  │      │ Acquire detection signals          │ ─── S23
  │      │ according to reflected light beams  │
  │      │ of first and second infrared rays,  │
  │      │ respectively                        │
  │      └─────────────────┬─────────────────┘
  │                        │
  │      ┌─────────────────▼─────────────────┐
  │      │ Store in memory, distance values   │ ─── S24
  │      │ corresponding to detection signals  │
  │      │ measured in advance, and with       │
  │      │ respect to detection signals of     │
  │      │ reflected light beams of first and  │
  │      │ second infrared rays, read out and  │
  │      │ determine distance values           │
  │      │ according to these signals,         │
  │      │ respectively                        │
  │      └─────────────────┬─────────────────┘
  │                        │
  │      ┌─────────────────▼─────────────────┐
  │      │ Store in memory a plurality of     │ ─── S25
  │      │ tilt values corresponding to        │
  │      │ distance values measured in         │
  │      │ advance, and read out and           │
  │      │ determine from memory, tilt value   │
  │      │ of screen corresponding to each     │
  │      │ of determined distance values       │
  │      └─────────────────┬─────────────────┘
  │                        │
  │      ┌─────────────────▼─────────────────┐
  │      │ Properly perform correction        │ ─── S26
  │      │ processing of video signal          │
  │      │ according to determined screen      │
  │      │ tilt value (keystone value), and    │
  │      │ irradiate irradiation light         │
  │      │ including corrected video image     │
  │      └─────────────────┬─────────────────┘
  │                        │
  │                 ┌───────▼──────┐
  │                 │     End      │
  │                 └──────────────┘
```

# F I G. 13

**European Patent Office**

## EUROPEAN SEARCH REPORT

Application Number

EP 06 00 8383

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 341 176 A (BABA ET AL) 23 August 1994 (1994-08-23) * column 3, line 18 - column 4, line 18 * ----- | 1-6,12, 13,17-19 | INV. H04N5/74 G03B21/53 |
| X | PATENT ABSTRACTS OF JAPAN vol. 013, no. 527 (P-965), 24 November 1989 (1989-11-24) & JP 01 214828 A (TOPCON CORP), 29 August 1989 (1989-08-29) * abstract * ----- | 1-3,5,7, 12,13, 17,20 | |
| X | US 5 400 093 A (TIMMERS ET AL) 21 March 1995 (1995-03-21) * column 21, lines 9-68 * ----- | 1,13 | |
| A,D | PATENT ABSTRACTS OF JAPAN vol. 2003, no. 06, 3 June 2003 (2003-06-03) & JP 2003 057743 A (MATSUSHITA ELECTRIC IND CO LTD), 26 February 2003 (2003-02-26) * abstract * ----- | 1-20 | |
| | | | TECHNICAL FIELDS SEARCHED (IPC) |
| A | EP 0 689 353 A (CANON KABUSHIKI KAISHA) 27 December 1995 (1995-12-27) * page 3, lines 17-33 * * page 5, lines 34-54 * ----- | 1-20 | H04N G03B |
| A | US 5 455 647 A (FUJIWARA ET AL) 3 October 1995 (1995-10-03) * column 4, line 40 - column 5, line 9 * ----- | 1-20 | |

The present search report has been drawn up for all claims

| Place of search | Date of completion of the search | Examiner |
|---|---|---|
| The Hague | 19 September 2006 | Pigniez, Thierry |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 00 8383

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2006

| Patent document cited in search report | | Publication date | Patent family member(s) | | Publication date |
|---|---|---|---|---|---|
| US 5341176 | A | 23-08-1994 | NONE | | |
| JP 01214828 | A | 29-08-1989 | JP | 2835838 B2 | 14-12-1998 |
| US 5400093 | A | 21-03-1995 | DE | 69315315 D1 | 02-01-1998 |
| | | | DE | 69315315 T2 | 30-04-1998 |
| | | | JP | 6284362 A | 07-10-1994 |
| JP 2003057743 | A | 26-02-2003 | NONE | | |
| EP 0689353 | A | 27-12-1995 | DE | 69523670 D1 | 13-12-2001 |
| | | | DE | 69523670 T2 | 01-08-2002 |
| | | | JP | 8009309 A | 12-01-1996 |
| | | | KR | 268366 B1 | 16-10-2000 |
| | | | US | 6310662 B1 | 30-10-2001 |
| US 5455647 | A | 03-10-1995 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11264963 A
- JP 2003057743 A